# EUROPEAN PATENT APPLICATION

(11) **EP 4 779 746 A1**
(43) Date of publication of application: **22.07.2026**
(21) Application number: 25857976.2
(22) Date of filing: 08.09.2025
(51) Int. Cl.: H01M 10/058, H01M 50/333, F16K 15/02, H01M 4/136

(54) **GAS RELEASE VALVE AND BATTERY MANUFACTURING METHOD USING SAME**

(30) Priority: 10.10.2024 KR 20240137512
(71) Applicant: LG ENERGY SOLUTION, LTD., Seoul 07335 (KR)
(72) Inventor: PARK, Joon Deok, Daejeon 34122 (KR); JUNG, Byoung Hyo, Daejeon 34122 (KR); PARK, Kyu Tae, Daejeon 34122 (KR); LIM, Ga Young, Daejeon 34122 (KR); YU, Seung Ah, Daejeon 34122 (KR)
(74) Representative: Goddar, Heinz J.
(86) International application number: PCT/KR2025/013856
(87) International publication number: WO 2026/079684

(57) **Abstract**

According to exemplary embodiments, a battery manufacturing method is provided. The method includes: preparing a battery cell including a case including an electrode accommodating part having an electrode accommodating space and a gas pocket part having a gas pocket space, and an electrode assembly accommodated in the electrode accommodating space; inserting a needle of a gas release valve into the gas pocket part; activating the battery cell; and discharging gas collected in the gas pocket part using the gas release valve.

## Description

### [Technical Field]

The present disclosure relates to a gas release valve and a battery manufacturing method using the same. This application claims the benefit of priority from Korean Patent Application No. 10-2024-0137512, filed on October 10, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are expanding from mobile devices to mobility.

The trend in technological development of secondary batteries is the improvement of energy density. Here, the energy density of a secondary battery is a value obtained by dividing the maximum electrical energy that the secondary battery can store by the mass or volume of the secondary battery. Various studies are being conducted for the development of batteries that are thin and light while having high energy density.

One of the measures to increase energy density is a pouch-type battery. A pouch-type battery can increase energy density by reducing empty spaces by stacking a positive electrode, a separator, and a negative electrode in layers in an aluminum foil pouch.

### [Summary]

### [Technical Problem]

The technical problem to be solved by the present disclosure is to provide a method for manufacturing a battery cell with improved reliability. In particular, in an activation process in which excessive pressure may be applied to a gas pocket, the present disclosure provides a method for relieving pressure using a release valve.

### [Technical Solution]

According to exemplary embodiments of the present disclosure for solving the above-described problem, a battery manufacturing method is provided. The method includes: preparing a battery cell including a case including an electrode accommodating part having an electrode accommodating space and a gas pocket part having a gas pocket space, and an electrode assembly accommodated in the electrode accommodating space; inserting a needle of a gas release valve into the gas pocket part; activating the battery cell; and discharging gas collected in the gas pocket part using the gas release valve. The gas release valve includes a gas discharge channel connected to the needle. The gas release valve operates based on an internal pressure of the gas pocket part.

The gas release valve includes a valve body configured to move between a closed position closing the gas discharge channel and an open position opening the gas discharge channel.

The step of the valve body moving from the closed position to the open position includes the valve body providing a compressive force to a spring coupled to the valve body. The step of the valve body moving from the open position to the closed position includes the spring providing a restoring force to the valve body.

The gas collected in the gas pocket part is discharged through a gas outlet of the gas release valve connected to the gas discharge channel at the open position of the valve body.

The step of discharging the gas collected in the gas pocket part is performed in a chamber having vacuum pressure.

The method further includes: removing the gas pocket part from the battery cell; and sealing the electrode accommodating part.

The method further includes separating the gas release valve from the removed gas pocket part.

The electrode assembly before the step of activating the battery cell includes a positive electrode, a negative electrode, and a separator interposed between the positive electrode and the negative electrode. The positive electrode includes lithium iron phosphate (LiFePO₄) and lithium iron oxide (Li₅FeO₄).

The step of inserting the needle of the gas release valve into the gas pocket part includes inserting the needle into the gas pocket part until a sealing portion of the gas release valve is in close contact with an outer surface of the gas pocket part.

The sealing portion of the gas release valve protrudes from the surface of the release valve in a direction perpendicular to an insertion direction of the needle.

The step of activating the battery cell includes repeating aging and charging and discharging multiple times.

According to exemplary embodiments of the present disclosure for solving the above-described problem, a battery manufacturing method is provided. The method includes: preparing a battery cell including an electrode assembly and a case accommodating the electrode assembly; inserting a needle of a gas release valve into the case; and maintaining an internal pressure of the battery cell below a reference pressure using the gas release valve.

The method further includes: removing the gas release valve from the battery cell; and sealing a portion of the case from which the gas release valve is removed.

### [Advantageous Effects]

According to exemplary embodiments of the present disclosure, by applying a gas release valve to a pouch-type case of a battery cell, unnecessary gas generated during a manufacturing process of the battery cell can be discharged. Accordingly, occurrence of wrinkles, cracks, and the like in a sealing portion of the battery cell can be prevented.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 and FIG. 2 are cross-sectional views illustrating battery cells according to exemplary embodiments.
FIG. 3 is a cross-sectional view illustrating an electrode assembly according to exemplary embodiments.
FIG. 4 and FIG. 5 are cross-sectional views illustrating a gas release valve according to exemplary embodiments.
FIG. 6 is a flowchart for explaining a method of manufacturing a battery cell according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

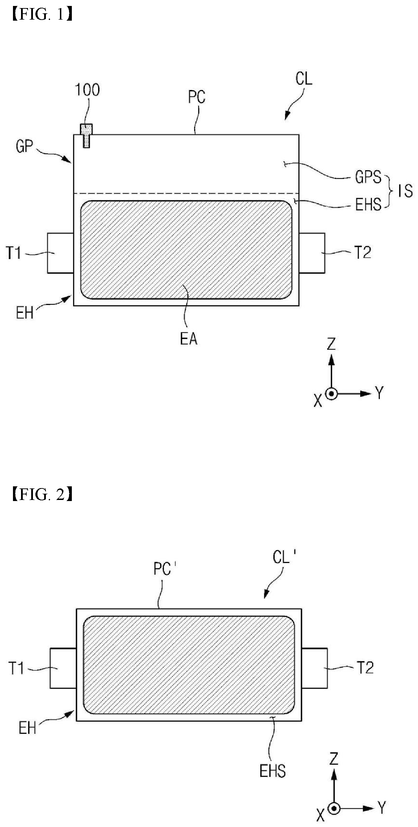

FIG. 1 and FIG. 2 are cross-sectional views illustrating battery cells CL and CL' according to exemplary embodiments. FIG. 1 illustrates a battery cell CL before a degassing process. FIG. 2 illustrates a battery cell CL after a degassing process.

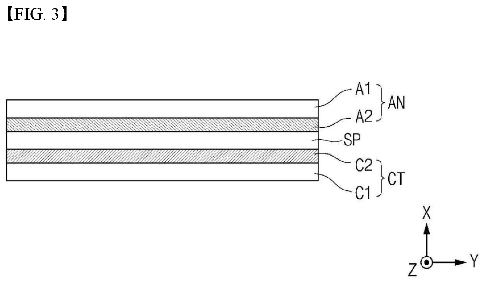

FIG. 3 is a cross-sectional view illustrating an electrode assembly EA.

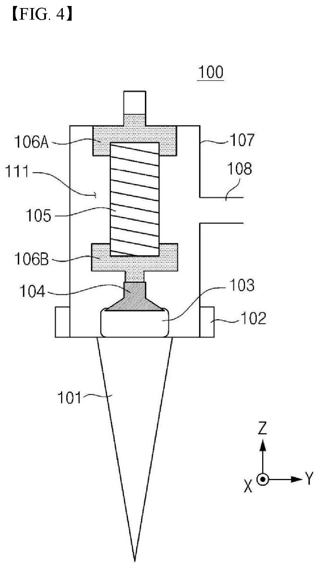

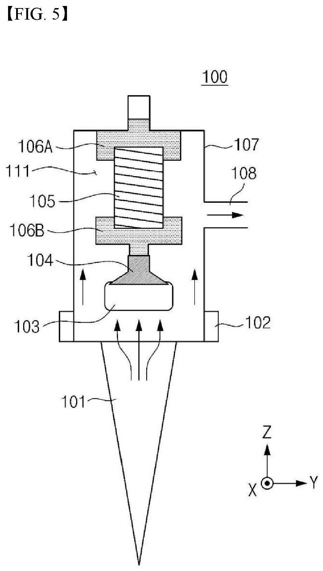

FIG. 4 and FIG. 5 are cross-sectional views illustrating a gas release valve 100 according to exemplary embodiments. FIG. 4 illustrates an embodiment in which the gas release valve 100 is in a closed position. FIG. 5 illustrates an embodiment in which the gas release valve 100 is in an open position.

Referring to FIG. 1 to FIG. 5, the battery cell CL before the degassing process may include a pouch-type case PC and an electrode assembly EA accommodated in the pouch-type case PC. The pouch-type case PC may include an aluminum laminate sheet. The pouch-type case PC may include an electrode accommodating part EH and a gas pocket part GP. The electrode accommodating part EH may have an electrode accommodating space EHS. The electrode accommodating part EH may accommodate the electrode assembly EA and an electrolyte in the electrode accommodating space EHS. The electrode accommodating space EHS may be connected to a gas pocket space GPS. The gas pocket part GP may accommodate gas generated during a manufacturing process of the battery cell CL in the gas pocket space GPS.

The electrode assembly EA may include a positive electrode CT, a negative electrode AN, and a separator SP interposed between the positive electrode CT and the negative electrode AN. According to exemplary embodiments, the electrode assembly EA includes a plurality of positive electrodes sequentially stacked, a plurality of negative electrodes, and a plurality of separators interposed therebetween. The positive electrode CT may include a positive electrode current collector C1 and a positive electrode active material layer C2 coated on the positive electrode current collector C1. The positive electrode current collector C1 may be aluminum foil or the like. The positive electrode active material layer C2 may include LiCoO₂, LiNiO₂, LiNi₁₋ₓCoₓO₂(0.2≤x≤0.5), LiNi_{1/3}Mn_{1/3}Co_{1/3}O₂, LiNi_{0.5}Mn_{0.5}O₂, LiMn₂O₄, LiMn₂₋ₓMₓO₄ (M is Al or Li, etc.), LiFePO₄ or the like. The positive electrode CT may include a positive electrode lead T1 at one end of the positive electrode CT.

The negative electrode AN may include a negative electrode current collector A1 and a negative electrode active material layer A2 coated on the negative electrode current collector A1. The negative electrode current collector A1 may be copper foil or nickel foil. The negative electrode active material may include lithium metal, graphite, coke, silicon, tin, or the like. The negative electrode AN may include a negative electrode lead T2 at one end of the negative electrode AN.

The separator SP may physically block contact between the positive electrode CT and the negative electrode AN. The separator SP may include polyethylene, polypropylene, polyolefin, PVdF (Polyvinylidene fluoride), inorganic nanoparticles (SiO₂, TiO₂, Al₂O₃, ZrO₂, etc.), or the like.

The battery cell CL may be electrically activated and stabilized through an activation step. The activation step may include a formation process, an aging process, and an additional charge and discharge process. The formation process is an initial charging process of the battery cell CL. The formation process may induce a reaction between the positive electrode CT and the electrolyte, and a reaction between the negative electrode AN and the electrolyte. By the reaction between the positive electrode CT and the electrolyte, a cathode electrolyte interphase (CEI) layer may be formed on the surface of the positive electrode CT. By the reaction between the negative electrode AN and the electrolyte, a solid electrolyte interphase (SEI) layer may be formed on the surface of the negative electrode AN. The aging process may include storing the battery cell CL in an environment having a controlled temperature and humidity. The electrolyte may be evenly distributed in the electrode assembly EA by the aging process. After the aging process, an additional charge and discharge process may be performed on the battery cell CL.

In the activation process of the battery cell CL, lithium ions of the battery cell CL may be consumed. For example, lithium ions of the battery cell CL may be consumed by formation of the SEI layer on the surface of the negative electrode AN. In addition, an irreversible phase transition of a crystal structure may occur in some of the negative electrode materials, and lithium ions of the battery cell CL may be consumed. Consumption of lithium ions may cause irreversible capacity loss of the battery, thereby decreasing the battery performance.

To prevent this, the positive electrode active material layer C2 may further include a sacrificial positive electrode material in addition to the positive electrode material. The sacrificial positive electrode material may be lithium oxide including an excess amount of lithium. The sacrificial positive electrode material may exhibit electrochemical activity in initial charging and discharging to supply lithium ions to the battery cell. The lithium ions supplied from the sacrificial positive electrode material may supplement the lithium ions consumed in the negative electrode AN. According to exemplary embodiments, the positive electrode active material layer C2 may include lithium iron phosphate (LiFePO₄) as the positive electrode material and include lithium iron oxide (Li₅FeO₄) as the sacrificial positive electrode material.

However, the sacrificial positive electrode material may generate a large amount of gas due to a redox reaction of anions during the initial charging and discharging process. According to exemplary embodiments, when lithium iron oxide (Li₅FeO₄) is used as the sacrificial positive electrode material, a large amount of oxygen gas (O₂) may be generated during initial charging and discharging.

In addition, gas may be generated by decomposition of the electrolyte in the activation process of the battery cell CL. According to exemplary embodiments, the battery cell CL may include one of ethylene carbonate, dimethyl carbonate, diethyl carbonate, and propylene carbonate as an organic solvent. The organic solvent of the electrolyte may generate gas while being decomposed under high voltage and high temperature conditions of the activation process. By decomposition of the organic solvent, carbon dioxide (CO₂), carbon monoxide (CO), methane (CH₄), ethylene (C₂H₄), or hydrogen (H₂) may be generated.

Gas generated in the activation process may be collected in an internal space IS of the pouch-type case PC of the battery cell CL, causing deformation such as expansion, denting, or cracking of the case. In this case, even if the gas is removed in a subsequent degassing process, the performance of the battery cell may be degraded due to deformation of the case.

The gas release valve 100 may be configured to be inserted into the pouch-type case PC of the battery cell CL to remove unnecessary gas collected in the internal space IS. A needle 101 of the gas release valve 100 may penetrate the pouch-type case PC and be inserted into the gas pocket part GP. The gas release valve 100 may be configured such that opening and closing are controlled according to an internal pressure of the pouch-type case PC of the battery cell CL. At a limit pressure that may cause damage to the case PC of the battery cell CL, the gas release valve 100 may release gas inside the case PC. The gas release valve 100 may be configured to maintain the internal pressure of the pouch-type case PC below a reference pressure. The gas release valve 100 may prevent deformation of the pouch-type case PC of the battery cell CL and block risk factors of the pouch-type case PC.

The gas release valve 100 may include a needle 101, a valve seat 103, a spring 105, and a valve housing 107. The needle 101 may be configured to penetrate the pouch-type case PC. According to exemplary embodiments, the needle 101 may have a conical shape. The needle 101 may be inserted into the internal space IS of the pouch-type case PC. The needle 101 may be provided at a lower end portion of the valve housing 107 in a Z direction. The needle 101 may include a material having higher strength than a material constituting the pouch-type case PC.

The valve seat 103 may move between a closed position (in FIG. 4) and an open position (in FIG. 5) according to the internal pressure of the pouch-type case PC. In the closed position of FIG. 4, the valve seat 103 may be in close contact with the needle 101 to separate a gas discharge channel 111 of the valve housing 107 from the needle 101. In the closed position, the pressure of the internal space IS of the battery cell CL may be below the reference pressure. Here, the reference pressure means the pressure of the internal space IS of the battery cell CL that can lift the valve seat 103 upward in the Z direction and apply a compressive force to the spring 105.

In the open position of FIG. 5, the valve seat 103 may move upward in the Z direction and be separated from the needle 101. In the open position, the pressure of the internal space IS of the battery cell CL may be equal to or greater than the reference pressure. In the open position, the internal space IS of the pouch-type case PC may be connected to the gas discharge channel 111 of the valve housing 107 through the needle 101. In FIG. 5, arrows without reference numerals indicate movement of gas flowing from the internal space IS of the pouch-type case PC into the gas release valve 100 through the needle 101. In the open position of the gas release valve 100, internal gas of the pouch-type case PC may move to the gas discharge channel 111 of the valve housing 107 through the needle 101 and be discharged to the outside through a gas outlet 108. When the pressure of the internal space of the pouch-type case PC becomes below the reference pressure, the valve seat 103 may move back to the closed position, and the gas release valve 100 may be in the closed state of FIG. 4. As the gas release valve 100 opens and closes according to the internal pressure of the pouch-type case PC, the internal pressure of the pouch-type case PC may be maintained below the reference pressure.

The gas outlet 108 may be connected to the gas discharge channel 111 of the gas release valve 100 at one end and connected to an external atmosphere at the other end. Gas in the gas discharge channel 111 of the gas release valve 100 may be discharged to the external atmosphere through the gas outlet 108. According to exemplary embodiments, the external atmosphere may have a vacuum pressure. Due to a pressure difference at both ends of the gas outlet 108, in the open state of the gas release valve 100, gas in the gas discharge channel 111 of the gas release valve 100 and residual gas in the internal space IS of the battery cell CL may be discharged to the external atmosphere through the gas outlet 108 and removed.

The valve seat 103 may be coupled to a valve seat holder 104. The valve seat holder 104 may be located at an upper portion of the valve seat 103 in the Z direction. The valve seat holder 104 may be coupled to a spring holder 106B.

The spring 105 may be coupled to spring holders 106A and 106B. The spring 105 may be coupled to the valve housing 107 by the spring holder 106A and coupled to the valve seat 103 by the spring holder 106B. When the valve seat 103 moves from the closed position of FIG. 4 to the open position of FIG. 5, the spring 105 may receive a compressive force from the valve seat. When the valve seat 103 moves from the open position of FIG. 5 to the closed position of FIG. 4, the spring 105 may apply a restoring force to the valve seat 103. The spring 105 may have different elastic coefficients depending on the battery cell CL to which the gas release valve 100 is applied. For example, in the case of a battery cell CL having a high reference internal pressure, a gas release valve 100 including a spring 105 having a higher elastic coefficient may be applied compared to a battery cell CL having a low reference internal pressure.

The gas release valve 100 may further include a sealing portion 102. The sealing portion 102 may be provided on the surface of the valve housing 107. The sealing portion 102 may protrude in an X direction perpendicular to a Z direction that is an extension direction of the needle 101. The sealing portion 102 may prevent the gas release valve 100 from being excessively inserted into the pouch-type case PC. The needle 101 may be inserted into the gas pocket part GP of the pouch-type case PC until the lower surface of the sealing portion 102 is in close contact with an outer surface of the pouch-type case PC. According to exemplary embodiments, the sealing portion 102 may be an O-ring. According to exemplary embodiments, the sealing portion 102 may include rubber. However, the type and material of the sealing portion 102 are not limited thereto. The sealing portion 102 may seal the pouch-type case PC at an insertion position of the gas release valve 100. This may prevent gas inside the pouch-type case PC from being discharged to the outside or gas outside the pouch-type case PC from flowing into the inside through gaps other than the needle 101.

Use of the gas release valve 100 is not limited to the activation step. According to exemplary embodiments, even when using a manufactured battery cell CL', there are cases where the pouch-type case PC' expands due to gas generated inside the battery cell CL'. The needle 101 of the gas release valve 100 may be inserted into the expanded battery cell CL' to remove gas collected inside the battery cell CL'. After removing the gas release valve 100 from the battery cell CL', at a portion from which the gas release valve 100 has been removed, the pouch-type case PC' may be sealed.

### (second embodiment)

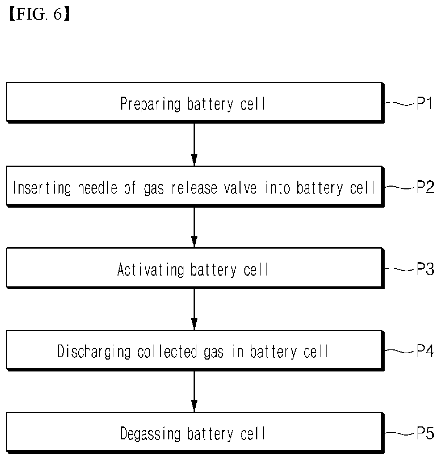

FIG. 6 is a flowchart for explaining a method of manufacturing a battery cell according to exemplary embodiments.

Referring to FIG. 1 and FIG. 4 to FIG. 6, at P1, a battery cell CL may be prepared. The battery cell CL may be in a state before an activation process is performed. An electrode assembly EA may be accommodated in an electrode accommodating part EH of a pouch-type case PC of the battery cell CL.

At P2, a needle 101 of a gas release valve 100 may be inserted into the battery cell CL. The needle 101 of the gas release valve 100 may penetrate the pouch-type case PC and be inserted into a gas pocket part GP of the pouch-type case PC.

At P3, the battery cell CL may be activated. The activation process may include a formation process, an aging process, and an additional charge and discharge process. In the activation process, unnecessary gas may be generated as a reaction byproduct. For example, by a redox reaction of anions of a sacrificial positive electrode material, unnecessary oxygen gas may be collected in an internal space IS of the pouch-type case PC.

At P4, the unnecessary gas collected in the internal space IS of the battery cell CL may be discharged from the internal space IS of the battery cell CL to the outside using the gas release valve 100. When the internal pressure of the battery cell CL is equal to or greater than a reference pressure, a valve seat 103 may move upward in a Z direction, and the internal space IS of the pouch-type case PC may communicate with a gas discharge channel 111 and a gas outlet 108 of the gas release valve 100. The gas collected in the pouch-type case PC may be discharged to the outside, and the internal pressure of the pouch-type case PC may be maintained below the reference pressure. Accordingly, deformation such as excessive expansion, denting, or cracking of the pouch-type case PC may be prevented. According to exemplary embodiments, the step of discharging the gas collected in the battery cell CL may be performed in a vacuum chamber.

At P5, a degassing process may be performed on the battery cell CL. The degassing process may include cutting off the gas pocket part GP in which the unnecessary gas is collected, and sealing the remaining electrode accommodating part EH. A battery cell CL' that has undergone the degassing process may include a pouch-type case PC' having a reduced volume.

According to exemplary embodiments, the method of manufacturing a battery cell may further include removing the gas release valve 100 from the removed gas pocket part GP. The recovered gas release valve 100 may be reused in a cell manufacturing process.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications that can substitute for these may exist at the time of filing the present application.

## Claims

1. A battery manufacturing method, comprising:
preparing a battery cell comprising a case comprising an electrode accommodating part having an electrode accommodating space and a gas pocket part having a gas pocket space, and an electrode assembly accommodated in the electrode accommodating space;
inserting a needle of a gas release valve into the gas pocket part;
activating the battery cell; and
discharging gas collected in the gas pocket part using the gas release valve,
wherein the gas release valve comprises a gas discharge channel connected to the needle, and
wherein the gas release valve operates based on an internal pressure of the gas pocket part.

2. The battery manufacturing method of claim 1, wherein the gas release valve comprises a valve body configured to move between a closed position closing the gas discharge channel and an open position opening the gas discharge channel.

3. The battery manufacturing method of claim 2, wherein the step of the valve body moving from the closed position to the open position comprises the valve body providing a compressive force to a spring coupled to the valve body, and
wherein the step of the valve body moving from the open position to the closed position comprises the spring providing a restoring force to the valve body.

4. The battery manufacturing method of claim 2, wherein the gas collected in the gas pocket part is discharged through a gas outlet of the gas release valve connected to the gas discharge channel at the open position of the valve body.

5. The battery manufacturing method of claim 1, wherein the step of discharging the gas collected in the gas pocket part is performed in a chamber having vacuum pressure.

6. The battery manufacturing method of claim 1, further comprising: removing the gas pocket part from the battery cell; and
sealing the electrode accommodating part.

7. The battery manufacturing method of claim 6, further comprising separating the gas release valve from the removed gas pocket part.

8. The battery manufacturing method of claim 1, wherein the electrode assembly before the activating step comprises a positive electrode, a negative electrode, and a separator interposed between the positive electrode and the negative electrode, and
wherein the positive electrode comprises lithium iron phosphate (LiFePO₄) and lithium iron oxide (Li₅FeO₄).

9. The battery manufacturing method of claim 1, wherein the step of inserting the needle of the gas release valve into the gas pocket part comprises inserting the needle into the gas pocket part until a sealing portion of the gas release valve is in close contact with an outer surface of the gas pocket part.

10. The battery manufacturing method of claim 9, wherein the sealing portion of the gas release valve protrudes from the surface of the release valve in a direction perpendicular to an insertion direction of the needle.

11. The battery manufacturing method of claim 1, wherein the step of activating the battery cell comprises repeating aging and charging and discharging multiple times.

12. A battery manufacturing method, comprising:
preparing a battery cell comprising an electrode assembly and a case accommodating the electrode assembly;
inserting a needle of a gas release valve into the case; and
maintaining an internal pressure of the battery cell below a reference pressure using the gas release valve.

13. The battery manufacturing method of claim 12, further comprising: removing the gas release valve from the battery cell; and
sealing a portion of the case from which the gas release valve is removed.
